(19) Europäisches Patentamt
European Patent Office
Office européen des brevets

(11) **EP 1 870 852 A2**

(12) **EUROPEAN PATENT APPLICATION**

(43) Date of publication:
**26.12.2007 Bulletin 2007/52**

(51) Int Cl.:
***G06T 3/40*** *(2006.01)*

(21) Application number: **07107881.0**

(22) Date of filing: **10.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **20.06.2006 KR 20060055243**

(71) Applicant: **Samsung Electronics Co., Ltd.**
**Suwon-si, Gyeonggi-Do (KR)**

(72) Inventor: **Lee, Seung-Ho**
**Yeongtong-gu, Suwon-si, Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(54) **Apparatus and method for low distortion display in a portable communication terminal**

(57)    Provided is an apparatus and method for low distortion display in a portable communication terminal. In the apparatus, a comparator calculates an overall scaling coefficient. A dividing unit divides the source image into a predetermined number of parts and calculates individual frequency values of the divided image parts using Discrete Cosine Transform (DCT). An aspect ratio adjustment unit calculates individual scaling coefficients of the divided image parts using the overall scaling coefficient and the individual frequency values of the divided image parts, and scales the divided image parts according to the individual scaling coefficients respectively. A combining unit combines the scaled image parts into a single complete image. The display unit displays the single complete image combined in the combining unit.

FIG.2

EP 1 870 852 A2

**Description**

**PRIORITY**

This application claims priority under 35 U.S.C. § 119 to an application entitled "Apparatus And Method For Low Distortion Display In Portable Communication Terminal" filed in the Korean Intellectual Property Office on June 20, 2006 and assigned Serial No. 2006-55243, the contents of which are incorporated herein by reference.

**BACKGROUND OF THE INVENTION**

1. Field of the Invention

The present invention relates generally to a display apparatus and method for a portable communication terminal, and in particular, to a display apparatus and method for a portable communication terminal, which can reduce a distortion of a source image caused by a change in an aspect ratio.

2. Description of the Related Art

Portable communication terminals such as a mobile communication terminal and a Personal Digital Assistant (PDA) are widely used, and their use is expanding more and more. The portable communication terminals provide users with basic functions such as a call function and a scheduling function as well as a variety of additional functions such as a photographing function using a built-in digital camera, a movie viewing function, a Digital Multimedia Broadcasting (DMB) function, a text editing function, and a game function.

Particularly, in viewing visual media such as DMB and movies, if the aspect ratios of DMB services and the like are different from the display aspect ratio of the portable communication terminal, a distortion of a source image transmitted from DMB services and the like may be produced. The aspect ratio is the ratio of the width and height of a frame, and the aspect ratio varies depending on visual media and standards. For example, while the aspect ratio of TV is 4:3, the aspect ratio of HDTV is 16:9 or in some parts of Europe the aspect ratio of HDTV is 14:9. As the devices, which are used to generate, transmit, store and display an image, are diversified, the aspect ratios of recorded, transmitted/received and displayed images may be different from each other.

That is, the aspect ratio of DMB service or movie is generally 16:9, while the display aspect ratio of a display unit in the portable communication terminal is generally 4:3 due to the size of the display unit.

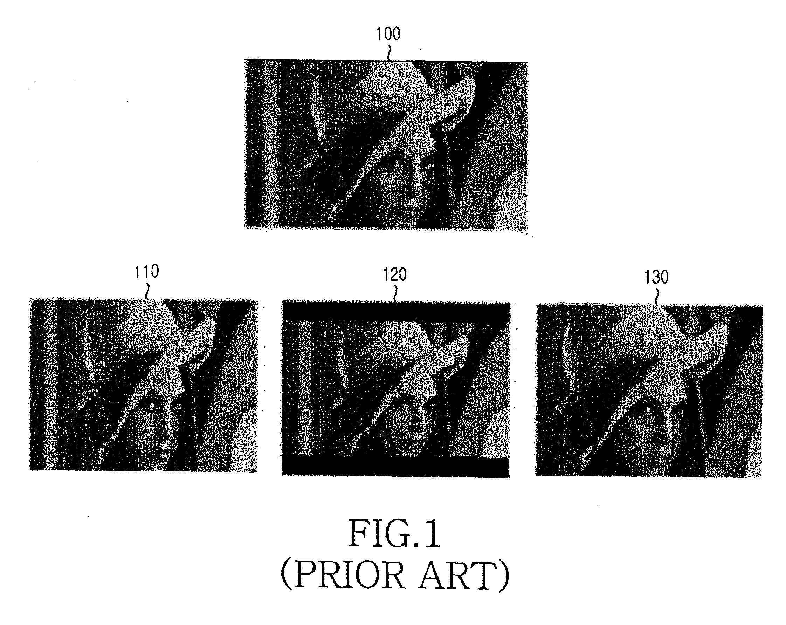

As such, when the aspect ratio of the source image is dissimilar to the display aspect ratio, a method as shown in FIG. 1 is generally used. FIG. 1 shows images derived from the source image having a different aspect ratio through various conventional techniques.

Referring to FIG. 1, there are methods to solve the difference between the aspect ratios in order to convert a source image 100 of a 16:9 aspect ratio into a display image of a 4:3 display aspect ratio, and output the display image. One method is to adjust the 16:9 aspect ratio to the 4:3 aspect ratio, which outputs a ratio-adjusted image 110. Another method is to output the source image of a 16:9 aspect ratio along with a letterbox instead of an unused display area, which outputs a letterbox image 120. Still another method is to output a part image by excluding some left and right portions of the source image 100, which outputs a part image 130.

However, the ratio-adjusted image 110 results in a distortion of a face shape due to the extension of the source image 100 in one side direction. In the letterbox image 110, the distortion of the source image 100 is not produced, but a small display area of the portable communication terminal is not fully used because of the letterbox. Finally, in the part image 130, while the distortion and the small display area use problems are not produced, there is an image loss problem that some portions of the source image 100 are not outputted. Therefore, a display apparatus and method of the portable communication terminal that can reduce the distortion without producing the display area use and the image loss problems is needed.

**SUMMARY OF THE INVENTION**

An object of the present invention is to substantially solve at least the above problems and/or disadvantages and to provide at least the advantages described below. Accordingly, an object of the present invention is to provide an apparatus and method for low distortion display in a portable communication terminal.

Another object of the present invention is to provide an apparatus and method for low distortion display in a portable communication terminal, which adjust the aspect ratio of a source image in part.

A further object of the present invention is to provide an apparatus and method for low distortion display in a portable communication terminal, which divide a source image into the parts, measure individual frequency values of the divided parts, and adjust individual aspect ratios of the divided parts respectively according to the individual frequency values.

According to an aspect of the present invention, there is provided an apparatus for low distortion display in a portable communication terminal, which includes a comparator for calculating an overall scaling coefficient when the aspect ratio of a source image is different from the display aspect ratio of a display unit; a dividing unit for dividing the source image into a predetermined number of parts and calculating individual frequency values of the divided image parts using Discrete Cosine Transform (DCT); an aspect ratio adjustment unit for calculating individual scaling coefficients of the divided image parts using the overall scaling coefficient and the individual frequency values of the divided image parts, and scaling the divided image parts according to the individual scaling coefficients respectively; a combining unit for combining the scaled image parts obtained in the aspect ratio adjustment unit into a single complete image (also referred to as restored image); and the display unit for outputting the single complete image combined in the combining unit.

According to another aspect of the present invention, there is provided a method for low distortion display in a portable communication terminal, which includes calculating an overall scaling coefficient when the aspect ratio of a source image is different from the display aspect ratio of a display unit; dividing the source image into a predetermined number of parts; calculating individual frequency values of the divided image parts using DCT; calculating individual scaling coefficients of the divided image parts using the overall scaling coefficient and the individual frequency values of the divided image parts; scaling the divided image parts respectively according to the individual scaling coefficients; and combining the scaled image parts into a single complete image.

## BRIEF DESCRIPTION OF THE DRAWINGS

The above and other objects, features and advantages of the present invention will become more apparent from the following detailed description when taken in conjunction with the accompanying drawings in which:

FIG. 1 illustrates images derived from an image having a different aspect ratio through various conventional techniques;
FIG. 2 is a block diagram illustrating a configuration of an apparatus for low distortion display in a portable communication terminal according to the present invention;
FIG. 3 is a flowchart illustrating an image display procedure in an apparatus for low distortion display in a portable communication terminal according to the present invention;
FIG. 4 is a flowchart illustrating a calculation procedure of individual scaling coefficients for divided image parts in an apparatus for low distortion display in a portable communication terminal according to the present invention; and
FIG. 5 illustrates images produced in an image display procedure of an apparatus for low distortion display in a portable communication terminal according to the present invention.

## DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

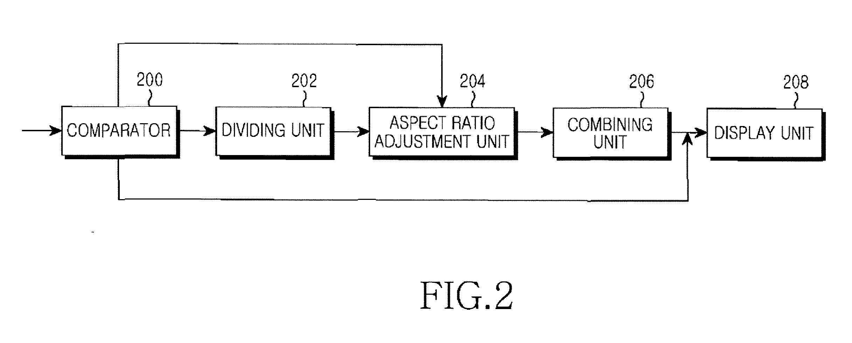

The present invention provides an apparatus and method for low distortion display in a portable communication terminal. In order to reduce a distortion of a source image due to a change of an aspect ratio, the present invention divides the source image (also referred to as received image) into parts and adjusts the aspect ratio of the divided image parts according to individual frequency values of the divided image parts. The apparatus of the present invention will be described with reference to FIG. 2.

FIG. 2 is a block diagram illustrating a configuration of an apparatus for low distortion display in a portable communication terminal according to the present invention. Referring to FIG. 2, the apparatus for low distortion display according to the present invention includes a comparator 200, a dividing unit 202, an aspect ratio adjustment unit 204, a combining unit 206, and a display unit 208.

The comparator 200 measures the aspect ratio of a source image and checks whether the aspect ratio of the source image is equal to the display aspect ratio of the display unit 208. If so, the comparator 200 provides the source image to the display unit 208. Otherwise, the comparator 200 provides the source image to the dividing unit 202, calculates an overall scaling coefficient (also referred to as a scaling coefficient of the horizontal axis) and provides the scaling coefficient to the aspect ratio adjustment unit 204. For example, if the aspect ratio of the source image is 16:9 and the aspect ratio of the display aspect ratio of the display unit 208 is 4:3, the overall scaling coefficient S is 0.75(3/4), where a range of S is $0 < S \leq 1$.

The dividing unit 202, receiving the source image from the comparator 200, divides horizontally the source image into a predetermined number of parts, calculates individual frequency values of the divided image parts using DCT and provides the divided image parts and the individual frequency values to the aspect ratio adjustment unit 204.

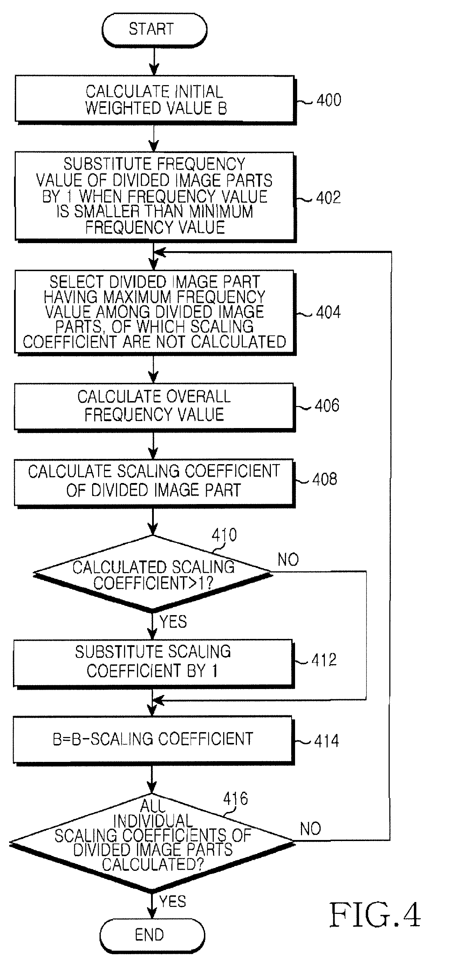

The aspect ratio adjustment unit 204 receives the divided image parts and the individual frequency values from the dividing unit 202, calculates individual scaling coefficients of the divided image parts using the overall scaling coefficient from the comparator 200 and the individual frequency values of the divided image parts, scales the divided image parts according to the individual scaling coefficients respectively, and provides the scaled image parts to the combining unit 206. The calculation of the individual scaling coefficients of the divided image parts in the aspect ratio adjustment unit 204 is described below with reference to FIG. 4.

In the aspect ratio adjustment unit 204, the individual scaling coefficients for scaling the divided image parts according to the individual frequency values have a characteristic as set forth in Equation (1):

$$S = \frac{\sum S_N}{N}, (0 < S_N \leq 1) \qquad \qquad \ldots \ldots (1)$$

where S is an overall scaling coefficient for making the aspect ratio of a source image and the display aspect ratio of the display unit 208 the same, a range of S is $0 < S \leq 1$, $S_N$ is a scaling coefficient of the $N^{th}$ divided image part, and N is a number of divided image parts.

That is, while the individual scaling coefficients are different from each other, the average value of the individual scaling coefficients must be equal to the overall scaling coefficient. Also, if a scaling coefficient of the $N^{th}$ divided image part is 0, the $N^{th}$ divided image part will disappear. If a scaling coefficient of the $N^{th}$ divided image part is larger than 1, the $N^{th}$ divided image part will be magnified. Therefore, the individual scaling coefficients must have values larger than 0 and equal to or smaller than 1.

Further, the individual scaling coefficients of the divided image parts, which are calculated by a procedure as illustrated in FIG. 4, increases as the importance assigned by the dividing unit 202 increases.

The combining unit 206 receives the scaled image parts, which are scaled according to the importance respectively. The combining unit 206 combines the scaled image parts into a single complete image and provides the single complete image to the display unit 208.

If the aspect ratio of the source image is equal to the display aspect ratio of the display unit 208, the display unit 208 outputs the source image provided from the comparator 200; otherwise, the display unit 208 outputs the single complete image combined in the combining unit 206. Also, the display unit 208 may use a Liquid Crystal Display (LCD) device.

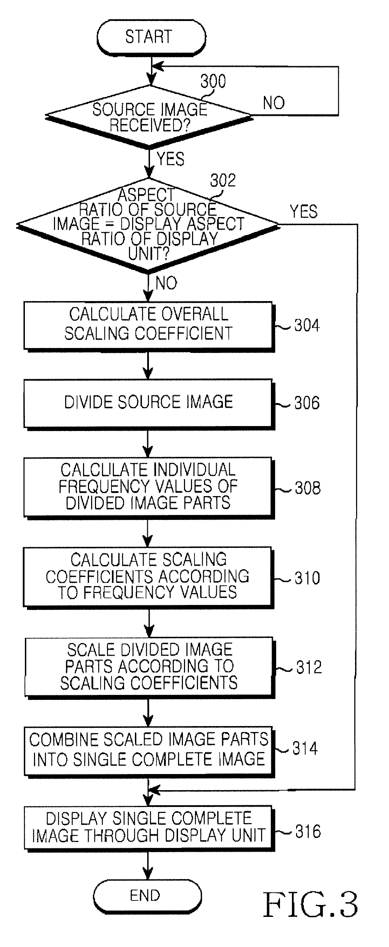

FIG. 3 is a flowchart illustrating an image display procedure in an apparatus for low distortion display in a portable communication terminal according to the present invention.

Referring to FIG. 3, in step 300 the apparatus for low distortion display according to the present invention receives a source image, which will be outputted in low distortion. Then, in step 302 the aspect ratio of the source image is compared to the display aspect ratio of the display unit 208. If the aspect ratio of the source image is equal to the display aspect ratio, the image display procedure proceeds to step 316 and the source image is outputted through the display unit 208.

However, if the aspect ratio of the source image is different from the display aspect ratio, the image display procedure proceeds to step 304 and an overall scaling coefficient is calculated for making the aspect ratio of the source image and the display aspect ratio of the display unit 208 the same. Then, in step 306 the source image is divided into a predetermined number of parts. Then, in step 308 individual frequency values of the divided image parts are calculated using DCT. Next, in step 310 individual scaling coefficients of the divided image parts are calculated using the individual frequency values and the overall scaling coefficient calculated in step 304. The calculation procedure of the individual scaling coefficients of the divided image parts in step 310 is described below in detail with reference to FIG. 4.

Then, in step 312 the divided image parts are scaled according to the individual scaling coefficients respectively. The image display procedure proceeds to step 314 and a single complete image is obtained by combining the scaled image parts. Next, in step 316 the single complete image is outputted through the display unit 208. Thereafter, the procedure of the present invention is ended.

FIG. 4 is a flowchart illustrating a calculation procedure of an individual scaling coefficient for a divided image part in an apparatus for low distortion display in a portable communication terminal according to the present invention.

Referring to FIG. 4, in step 400, the aspect ratio adjustment unit 204 of the present invention calculates a weighted value B to guarantee Equation (1). The weighted value is calculated as set forth in Equation (2):

$$B = S \times N \qquad \qquad \dots \dots (2)$$

where B is a weighted value, S is an overall scaling coefficient, and $N$ is a number of divided image parts.

In step 402, if the individual frequency values of the divided image parts is smaller than a minimum frequency value $F_{min}$, the aspect ratio adjustment unit 204 substitutes such individual frequency values by the minimum frequency value $F_{min}$. If an individual frequency value of a divided image part is 0, the individual scaling coefficient of the divided image part is 0, and thus when the divided image part is scaled, the divided image part becomes disappeared. Accordingly, in step 402 the minimum frequency value $F_{min}$ is used to guarantee that the individual scaling coefficients are larger than a predetermined scaling coefficient. The minimum frequency value $F_{min}$ is obtained as set forth in Equation (3):

$$F_{\min} = F_{\max} \times R_{\min} \qquad \qquad \dots \dots (3)$$

where $F_{min}$ is a minimum frequency value which the divided image parts can have, $F_{max}$ is a maximum frequency value among the individual frequency values of the divided image parts, and $R_{min}$ is a factor for obtaining the minimum frequency value $F_{min}$.

In step 404, the aspect ratio adjustment unit 204 selects a divided image part having a maximum frequency value among the divided image parts, of which the individual scaling coefficients are not yet calculated. In step 406, an overall frequency value is calculated, which is a sum of all the individual frequency values of the divided image parts, of which the individual scaling coefficients are not yet calculated. In step 408, the individual scaling coefficients of the divided image parts are calculated. The calculation of the individual scaling coefficients is obtained as set forth in Equation (4):

$$S_N = \frac{F_N}{F_T} \times B \qquad \qquad \dots \dots (4)$$

where $S_N$ is a scaling coefficient of the Nth divided image part, $F_T$ is an overall frequency value which is a sum of all the individual frequency values of the divided image parts, of which the individual scaling coefficients are not yet calculated, $F_N$ is a frequency value of the Nth divided image part, and B is a weighted value.

In step 410, the aspect ratio adjustment unit 204 checks whether the scaling coefficient is larger than 1. If the scaling coefficient is equal to or smaller than 1, the aspect ratio adjustment unit 204 should proceed to step 414 and adjusts the weighted value B.

Alternatively, if the scaling coefficient is larger than 1, the aspect ratio adjustment unit 204 proceeds to step 412 and substitutes the scaling coefficient by 1. In step 414, the aspect ratio adjustment unit 204 adjusts the weighted value B. The weighted value B can be adjusted as set forth in Equation (5):

$$B = B - S_N \qquad \qquad \dots \dots (5)$$

where $B$ is a weighted value, and $S_N$ is a scaling coefficient of the Nth divided image part.

In Equation (1) above, if the scaling coefficient $S_N$ is larger than 1, the scaling coefficient $S_N$ is substituted by 1 in step 412.

After adjusting the weighted value $B$ in step 414, the aspect ratio adjustment unit 204 should proceed to step 416 and checks whether all of the individual scaling coefficients of the divided image parts are calculated. If all the individual scaling coefficients are not calculated, the aspect ratio adjustment unit 204 should proceed back to step 404 and performs next steps. Then, if all the individual scaling coefficients are calculated, the procedure in FIG. 4 is ended.

For example, when a source image of a 16:9 aspect ratio is outputted through a display unit of a 4:3 display aspect ratio of the present invention, the source image is divided into six image parts and individual frequency values of the six image parts are 10, 0, 20, 50, 100 and 200, respectively Individual scaling coefficients are calculated as below.

If the individual frequency values are expressed as $F_1$=10, $F_2$=0, $F_3$=20, $F_4$=50, $F_5$=100 and $F_6$=200, the minimum frequency value can be calculated as shown below before calculating individual scaling coefficients of the six image parts. If $R_{min}$ is 1% (i.e. 0.01), then $F_{min}$ is $F_{max} \times 0.01$ as set forth in Equation (3). In this case, $F_{max}$ is $F_6$ (i.e. 200), so $F_{min}$ is 200×0.01=2. $F_2$ is smaller than $F_{min}$, thus $F_2$=0 is substituted by $F'_2$=2.

Also, an overall frequency value $F_T$ that is the sum of all the individual frequency values, and a weighted value are calculated before calculating the individual scaling coefficients of the six image parts. In this case, $F_T$ is 382 and the weighted value is 4.5 as set forth in Equation (2) (i.e. $B=S \times N$=0.75×6=4.5).

The individual scaling coefficients are calculated as follows using the individual frequency values, the overall frequency value and the weighted value.

$$S_6 = F_6 / F_T \times B = 200/382 \times 4.5 = 2.35 \rightarrow 1,$$

$$S_5 = F_5 / F'_T \times B' = 100/182 \times 3.5 = 1.92 \rightarrow 1,$$

$$S_4 = F_4 / F'_T \times B' = 50/82 \times 2.5 = 1.52 \rightarrow 1,$$

$$S_3 = F_3 / F'_T \times B' = 20/32 \times 1.5 = 0.937,$$

$$S_1 = F_1 / F'_T \times B' = 10/12 \times 0.56 = 0.469,$$

$$S_2 = F_2 / F'_T \times B' = 2/2 \times 0.1 = 0.1.$$

Then, the individual scaling coefficients $S_N$ should be larger than 0 and equal to or smaller than 1. Therefore, the individual scaling coefficients having a value larger than 1 are all substituted by 1. That is, $S_6$, $S_5$ and $S_4$ all are larger than 1, so the values of $S_6$, $S_5$ and $S_4$ are substituted by 1. Also, $F_T$ is the sum of the individual frequency values of the divided image parts, of which the individual scaling coefficients are not yet calculated. $F'_T$ means that the sum of the individual frequency values change whenever the individual scaling coefficients are calculated. $B'$ also means that the weighted value changes whenever the individual scaling coefficients are calculated. The weighted value adjustment is performed using Equation (5) above herein.

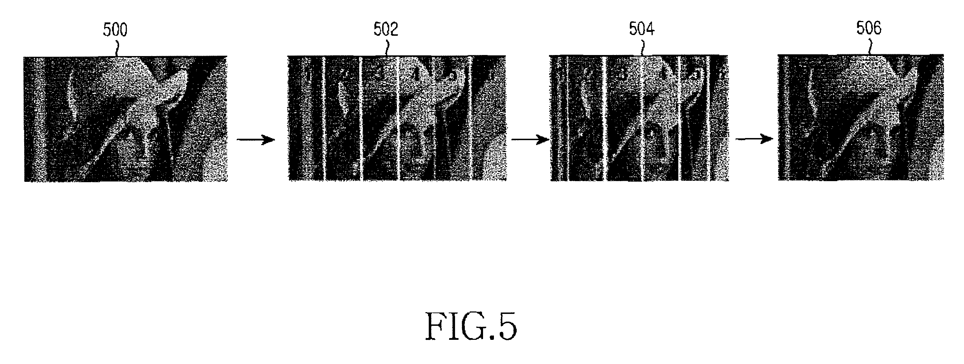

Then, when the source image of a 16:9 aspect ratio is displayed through the display unit of a 4:3 display aspect ratio of the present invention, the display procedure is described with reference to FIG. 5. FIG. 5 illustrates images produced in an image display procedure of an apparatus for low distortion display in a portable communication terminal according to the present invention.

A first image indicates a source image 500, which is received to the comparator 200 and is not yet scaled. A second image indicates a divided image 502, which is obtained by dividing the source image 500 into a predetermined number through the dividing unit 202. A third image indicates a scaled image 504, which is obtained by scaling the divided image parts of the divided image 502 respectively through the aspect ratio adjustment unit 204. A fourth image indicates a combined image 506, which is obtained by combining the scaled image parts through the combining unit 206. The combined image 506 will be displayed through the display unit 208.

As described above, the present invention provides a low distortion display apparatus and method for reducing the distortion of an image due to an aspect ratio change in a portable communication terminal. By dividing the source image into a plurality of parts and scaling the divided source image parts respectively according to individual frequency values of the divided source image parts, the present invention has effects in that a distortion and a loss of the source image, and a display use problems can be solved.

While the invention has been shown and described with reference to certain preferred embodiments thereof, it will be understood by those skilled in the art that various changes in form and details may be made therein without departing from the spirit and scope of the invention as defined by the appended claims.

**Claims**

1. An apparatus for low distortion display in a portable communication terminal, comprising:

  a comparator (200) for calculating an overall scaling coefficient if an aspect ratio of a source image is different from a display aspect ratio of a display unit (208);
  a dividing unit (202) for dividing the source image into a predetermined number of parts and calculating individual frequency values of the divided image parts using Discrete Cosine Transform (DCT);
  an aspect ratio adjustment unit (204) for calculating individual scaling coefficients of the divided image parts using the overall scaling coefficient and the individual frequency values of the divided image parts, and for scaling the divided image parts according to the individual scaling coefficients respectively;
  a combining unit (206) for combining the scaled image parts obtained in the aspect ratio adjustment unit into a single complete image; and
  the display unit (208) for outputting the single complete image combined in the combining unit.

2. The apparatus of claim 1, wherein the dividing unit (202) is adapted to divide the source image horizontally into a predetermined number of parts.

3. The apparatus of claim 1 or 2, wherein the individual scaling coefficients of the divided image parts calculated in the aspect ratio adjustment unit have a characteristic of

$$ S = \frac{\sum S_N}{N}, (0 < S_N \leq 1), $$

where S is an overall scaling coefficient for making the aspect ratio of the source image and the display aspect ratio of the display unit (208) the same, a range of S is $0 < S \leq 1$, $S_N$ is a scaling coefficient of the N$^{th}$ divided image part, and $N$ is a number of divided image parts.

4. The apparatus of any one of claims 1 to 3, wherein, when the aspect ratio adjustment unit (204) is adapted to calculate the individual scaling coefficients of the divided image parts, the individual scaling coefficients of the divided image parts are set to predetermined values according to an order of the individual frequency values of the divided image parts from highest to lowest frequency value.

5. The apparatus of any one of claims 1 to 4, wherein the aspect ratio adjustment unit (204) is adapted to calculate an initial weighted value, to select the divided image parts in order of the individual frequency values of the divided image parts from highest to lowest frequency value, to calculate an overall frequency value, to calculate the individual scaling coefficients of the divided image parts using the overall frequency value and the weighted value, and to adjust the weighted value using the individual scaling coefficients, when the aspect ratio adjustment unit (204) calculates the individuals scaling coefficients of the divided image parts.

6. The apparatus of claim 5, wherein the aspect ratio adjustment unit (204) is adapted to select the divided image parts in order of the individual frequency values of the divided image parts from highest to lowest frequency value, and to calculate the individual scaling coefficients of the divided image parts until all the individual scaling coefficients are calculated.

7. The apparatus of claim 5, wherein the aspect ratio adjustment unit (204) is adapted to calculate the initial weighted value by

$$B = S \times N,$$

where $B$ is an initial weighted value, $S$ is an overall scaling coefficient, and $N$ is a number of divided image parts.

8. The apparatus of claim 5, wherein the aspect ratio adjustment unit (204) is adapted to calculate the overall frequency value by adding all the individual frequency values of the divided image parts, of which the individual frequency values are not calculated.

9. The apparatus of claim 5, wherein the aspect ratio adjustment unit (204) is adapted to substitute the frequency value with the minimum frequency value, after calculating the initial weighted value and before selecting the divided image parts, and if a frequency value of a divided image part is smaller than a minimum frequency value.

10. The apparatus of claim 9, wherein the aspect ratio adjustment unit (204) is adapted to calculate the minimum frequency value by

$$F_{\min} = F_{\max} \times R_{\min},$$

where $F_{min}$ is a minimum frequency value which the divided image parts can have, $F_{max}$ is a maximum frequency value among the individual frequency values of the divided image parts, and $R_{min}$ is a factor for obtaining the minimum frequency value $F_{min}$.

11. The apparatus of claim 5, wherein the aspect ratio adjustment unit (204) is adapted to calculate the individual scaling coefficients of the divided image parts by

$$S_N = \frac{F_N}{F_T} \times B,$$

where $S_N$ is a scaling coefficient of the N$^{th}$ divided image part, $F_T$ is the overall frequency value which is a sum of all the individual frequency values of the divided image parts, of which the individual scaling coefficients are not calculated, $F_N$ is a frequency value of the N$^{th}$ divided image part, and $B$ is a weighted value.

12. The apparatus of claim 11, wherein the aspect ratio adjustment unit (204) is adapted to substitute the individual scaling coefficients by 1, if the individual scaling coefficients of the divided image parts are larger than 1.

13. The apparatus of claim 5, wherein the aspect ratio adjustment unit (204) is adapted to adjust the weighted value using

$$B = B - S_N,$$

where $B$ is a weighted value, $S_N$ is a scaling coefficient of the N$^{th}$ divided image part.

14. A method for low distortion display in a portable communication terminal, comprising the steps of:

calculating an overall scaling coefficient if an aspect ratio of a source image is different from a display aspect ratio of a display unit;
dividing the source image into a predetermined number of parts;
calculating individual frequency values of the divided image parts using Discrete Cosine Transform (DCT);
calculating individual scaling coefficients of the divided image parts using the overall scaling coefficient and the individual frequency values of the divided image parts; and
scaling the divided image parts respectively according to the individual scaling coefficients;

combining the scaled image parts into a single complete image.

**15.** The method of claim 14, wherein the source image is horizontally divided into the predetermined number of parts.

**16.** The method of claim 14 or 15, wherein, in the step of calculating the individual scaling coefficients, the individual scaling coefficients of the divided image parts have a characteristic of

$$S = \frac{\sum S_N}{N}, (0 < S_N \leq 1),$$

where S is an overall scaling coefficient for making the aspect ratio of a source image and the display aspect ratio of the display unit 208 the same, a range of $S$ is $0 < S \leq 1$, $S_N$ is a scaling coefficient of the N$^{th}$ divided image part, and $N$ is a number of divided image parts.

**17.** The method of any one of claims 14 to 16, wherein, in the step of calculating the individual scaling coefficients, the individual scaling coefficients of the divided image parts are set to predetermined values according to an order of the individual frequency values of the divided image parts from highest to lowest frequency value.

**18.** The method of any one of claims 14 to 17, wherein the step of calculating the individual scaling coefficients of the divided image parts comprises
calculating an initial weighted value;
selecting the divided image parts in order of the individual frequency values of the divided image parts from highest to lowest frequency value;
calculating an overall frequency value;
calculating individual scaling coefficients of the divided image parts using the overall frequency value and the weighted value; and
adjusting the weighted value using the individual scaling coefficients.

**19.** The method of claim 18, wherein the step of adjusting the weighted value repeats until all the individual scaling coefficients of the divided image parts are calculated in order of the individual frequency values from highest to lowest frequency value.

**20.** The method of claim 18, wherein the step of calculating the initial weighted value is performed according to

$$B = S \times N,$$

where $B$ is a weighted value, $S$ is an overall scaling coefficient, and $N$ is a number of divided image parts.

**21.** The method of claim 18, wherein an aspect ratio adjustment unit (204) calculates the overall frequency value by adding all the individual frequency values of the divided image parts, of which the individual frequency values are not calculated.

**22.** The method of claim 18, further comprising the substituting a frequency value of a divided image part by a minimum frequency value between the step of calculating the initial weighted value and the step of selecting the divided image parts in order of the individual frequency values of the divided image parts from highest to lowest frequency value, if the frequency value of the divided image parts is smaller than the minimum frequency value.

**23.** The method of claim 22, wherein, in the step of substituting the frequency value of the divided image part by the minimum frequency value, the minimum frequency value is calculated by

$$F_{min} = F_{max} \times R_{min},$$

where $F_{min}$ is a minimum frequency value which the divided image parts can have, $F_{max}$ is a maximum frequency value among the individual frequency values of the divided image parts, and $R_{min}$ is a factor for obtaining the minimum frequency value $F_{min}$.

24. The method of claim 18, wherein, in the step of calculating the individual scaling coefficients of the divided image parts, the individual scaling coefficients are calculated by

$$S_N = \frac{F_N}{F_T} \times B,$$

where $S_N$ is a scaling coefficient of the $N^{th}$ divided image part, $F_T$ is the overall frequency value which is a sum of all the individual frequency values of the divided image parts, of which the individual scaling coefficients are not calculated, $F_N$ is a frequency value of the $N^{th}$ divided image part, and B is a weighted value.

25. The method of claim 24, the step of calculating the individual scaling coefficients of the divided image parts further comprises substituting the individual scaling coefficients of the divided image parts by 1 if the individual scaling coefficients are larger than 1.

26. The method of claim 18, wherein, in the step of adjusting the weighted value, the weighted value is adjusted by

$$B = B - S_N$$

where $B$ is a weighted value, $S_N$ is a scaling coefficient of the $N^{th}$ divided image part.

27. A portable communication terminal for low distortion display, comprising:

a dividing unit for dividing a source image into a predetermined number of parts and calculating individual frequency values of the divided image parts using Discrete Cosine Transform (DCT);
an aspect ratio adjustment unit for calculating individual scaling coefficients of the divided image parts using the overall scaling coefficient and the individual frequency values of the divided image parts, and scaling the divided image parts according to the individual scaling coefficients respectively; and
a combining unit for combining the scaled image parts obtained in the aspect ratio adjustment unit into a single complete image.

28. A portable communication terminal for low distortion display, comprising the apparatus of any one of claims 1 to 13.

29. A method for low distortion display in a portable communication terminal, comprising the steps of:

dividing a source image into a predetermined number of parts;
calculating individual frequency values of the divided image parts using Discrete Cosine Transform (DCT);
calculating individual scaling coefficients of the divided image parts using the overall scaling coefficient and the individual frequency values of the divided image parts;
scaling the divided image parts respectively according to the individual scaling coefficients; and
combining the scaled image parts into a single complete image.

FIG.1
(PRIOR ART)

FIG.2

```
                    ┌──────────┐
                    │  START   │
                    └────┬─────┘
                         │         ┌──────────────────►
                         ▼     300 │
                    ╱─────────────╲     NO
                   ╱ SOURCE IMAGE  ╲────────┘
                   ╲  RECEIVED?    ╱
                    ╲─────────────╱
                         │ YES
                         ▼                302
                    ╱─────────────╲
                   ╱   ASPECT      ╲   YES
                  ╱ RATIO OF SOURCE ╲──────────┐
                 ╱ IMAGE = DISPLAY   ╲         │
                 ╲ RATIO OF DISPLAY  ╱         │
                  ╲    UNIT?        ╱          │
                   ╲──────────────╱            │
                         │ NO                  │
                         ▼                     │
              ┌─────────────────────┐         │
              │  CALCULATE OVERALL  │~304     │
              │  SCALING COEFFICIENT│         │
              └──────────┬──────────┘         │
                         ▼                     │
              ┌─────────────────────┐         │
              │  DIVIDE SOURCE IMAGE│~306     │
              └──────────┬──────────┘         │
                         ▼                     │
              ┌─────────────────────┐         │
              │ CALCULATE INDIVIDUAL│         │
              │ FREQUENCY VALUES OF │~308     │
              │  DIVIDED IMAGE PARTS│         │
              └──────────┬──────────┘         │
                         ▼                     │
              ┌─────────────────────┐         │
              │  CALCULATE SCALING  │         │
              │COEFFICIENTS ACCORDING│~310    │
              │  TO FREQUENCY VALUES│         │
              └──────────┬──────────┘         │
                         ▼                     │
              ┌─────────────────────┐         │
              │  SCALE DIVIDED IMAGE│         │
              │  PARTS ACCORDING TO │~312     │
              │ SCALING COEFFICIENTS│         │
              └──────────┬──────────┘         │
                         ▼                     │
              ┌─────────────────────┐         │
              │COMBINE SCALED IMAGE │~314     │
              │PARTS INTO SINGLE    │         │
              │COMPLETE IMAGE       │         │
              └──────────┬──────────┘         │
                         ▼◄────────────────────┘
              ┌─────────────────────┐
              │DISPLAY SINGLE       │~316
              │COMPLETE IMAGE THROUGH│
              │DISPLAY UNIT         │
              └──────────┬──────────┘
                         ▼
                    ┌──────────┐
                    │   END    │
                    └──────────┘
```

## FIG.3

```
                    ┌──────────┐
                    │  START   │
                    └────┬─────┘
                         ▼
          ┌─────────────────────────────┐
          │     CALCULATE INITIAL       │── 400
          │      WEIGHTED VALUE B       │
          └──────────────┬──────────────┘
                         ▼
          ┌─────────────────────────────┐
          │    SUBSTITUTE FREQUENCY     │
          │  VALUE OF DIVIDED IMAGE PARTS│── 402
          │   BY 1 WHEN FREQUENCY VALUE │
          │     IS SMALLER THAN MINIMUM │
          │       FREQUENCY VALUE       │
          └──────────────┬──────────────┘
                         ▼
          ┌─────────────────────────────┐
          │   SELECT DIVIDED IMAGE PART │
          │   HAVING MAXIMUM FREQUENCY  │
          │   VALUE AMONG DIVIDED IMAGE │── 404
          │     PARTS, OF WHICH SCALING │
          │  COEFFICIENT ARE NOT CALCULATED│
          └──────────────┬──────────────┘
                         ▼
          ┌─────────────────────────────┐
          │     CALCULATE OVERALL       │── 406
          │      FREQUENCY VALUE        │
          └──────────────┬──────────────┘
                         ▼
          ┌─────────────────────────────┐
          │ CALCULATE SCALING COEFFICIENT│── 408
          │     OF DIVIDED IMAGE PART   │
          └──────────────┬──────────────┘
                         ▼
                   ◇ 410
              CALCULATED SCALING      NO
              COEFFICIENT>1? ─────────────────┐
                         │ YES                 │
                         ▼                     │
          ┌─────────────────────────────┐     │
          │     SUBSTITUTE SCALING      │── 412│
          │       COEFFICIENT BY 1      │     │
          └──────────────┬──────────────┘     │
                         ◄────────────────────┘
                         ▼
          ┌─────────────────────────────┐
          │    B=B-SCALING COEFFICIENT  │── 414
          └──────────────┬──────────────┘
                         ▼
                   ◇ 416
                  ALL
               INDIVIDUAL
           SCALING COEFFICIENTS OF    NO
           DIVIDED IMAGE PARTS ─────────────
              CALCULATED?
                         │ YES
                         ▼
                    ┌──────────┐
                    │   END    │
                    └──────────┘
```

FIG.4

FIG.5

## EP 1 870 852 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 200655243